(19)

Europäisches
Patentamt
European
Patent Office
Office européen
des brevets

(11) **EP 3 821 718 A1**

(12) **EUROPEAN PATENT APPLICATION**

(43) Date of publication:
**19.05.2021 Bulletin 2021/20**

(51) Int Cl.:
**A23L 5/20** *(2016.01)*      **A23L 33/135** *(2016.01)*

(21) Application number: **19209460.5**

(22) Date of filing: **15.11.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **DuPont Nutrition Biosciences ApS
1411 Copenhagen K (DK)**

(72) Inventors:
• **OUWEHAND, Arthur
  02460 Kantvik (FI)**

• **IBARRA, Sixto Alvin
  48210 Kotka (FI)**
• **NASKI, Lauri Johan Tobias
  02460 Kantvik (FI)**
• **MARTTINEN, Maija Emilia
  02460 Kantvik (FI)**
• **FORSSTEN, Sofia
  02460 Kantvik (FI)**
• **RASINKANGAS, Pia Tuulikki
  02460 Kantvik (FI)**

(74) Representative: **DuPont EMEA
Langebrogade 1
1411 Copenhagen K (DK)**

(54) **PROBIOTICS FOR LACTOSE INTOLERANCE**

(57)   The invention relates to a bacterium of the species *Bifidobacterium lactis* and compositions comprising a bacterium of the species *Bifidobacterium lactis* for use in improving lactose digestion and/or relieving symptoms associated with lactose intolerance, in a mammal. The invention further relates to methods and uses of said bacterium and/or compositions.

EP 3 821 718 A1

## Description

### FIELD OF THE INVENTION

This invention relates to bacteria of the species *Bifidobacterium animalis ssp. lactis* for use in improving lactose digestion, in a mammal. This invention also relates to bacteria of the species *Bifidobacterium animalis ssp. lactis* for use in relieving symptoms of lactose intolerance, in a mammal. This invention further relates to compositions, methods and uses of compositions comprising *Bifidobacterium animalis ssp. lactis,* including food products, dietary supplements, and pharmaceutically acceptable formulations/compositions.

### BACKGROUND

Lactose intolerance is a common state for adult mammals, including humans, and is caused by the loss of intestinal production of $\beta$-galactosidase after childhood. Because $\beta$-galactosidase is no longer expressed, lactose is not digested and enters the colon unchanged where it stimulates uncontrolled microbial activity. The microbial activity leads to gastrointestinal symptoms such as bloating, flatulence, cramps, diarrhoea, etc. Lactose intolerant subjects therefore tend to refrain from consumption of dairy products, which means they will miss out on the important nutrients normally provided by dairy, such as calcium, vitamin D and high-quality protein.

In order to make dairy products tolerable to lactose-maldigesting subjects, the lactose has to be removed or an exogenous source of $\beta$-galactosidase needs to be provided. Exogenous $\beta$-galactosidase is commonly produced by fungi and yeast and can be added to the dairy product to produce a low-lactose product or it can be consumed by the individual in association with a lactose containing meal. Several bacteria, and most notably bacteria belonging to the group of Lactic Acid Bacteria and bifidobacteria are able to hydrolyse lactose through their own $\beta$-galactosidase. These bacteria can therefore function as exogenous sources of $\beta$-galactosidase and contribute to the digestion of lactose in a lactose containing meal, thus reducing symptoms of lactose intolerance.

To this end, we investigated if a specific strain of *Bifidobacterium,* the *Bifidobacterium animalis* ssp. *lactis* Bi-07 would contribute to the digestion of lactose in vitro and in simulated digestive conditions. This has been compared with clinically approved commercial $\beta$-galactosidase products.

### OBJECT OF INVENTION

It is an object of the present invention to provide means for improving lactose digestion, in a mammal. Furthermore, it is also the object of the present invention to provide means for relieving symptoms of lactose intolerance, in a mammal.

### SUMMARY OF THE INVENTION

The present invention is based on studies described herein which surprisingly demonstrate that a bacterium of the species *Bifidobacterium lactis* can significantly improve lactose digestion and/or relieve symptoms associated with lactose intolerance.

Accordingly, in one aspect, the invention provides a bacterium of the species *Bifidobacterium lactis* for use in improving lactose digestion and/or relieving symptoms associated with lactose intolerance, in a mammal.

In another aspect, the invention provides a composition comprising a bacterium of the species *Bifidobacterium lactis* for use in improving lactose digestion and/or relieving symptoms associated with lactose intolerance, in a mammal.

In a further aspect, the invention provides a method of improving lactose digestion and/or relieving symptoms associated with lactose intolerance in a mammal, comprising administering to the mammal a bacterium of the species *Bifidobacterium lactis.*

In yet another aspect, the invention provides for use of a bacterium of the species *Bifidobacterium lactis* for improving lactose digestion and/or relieving symptoms associated with lactose intolerance, in a mammal.

### DETAILED DESCRIPTION OF INVENTION

<u>Bacteria</u>

The bacteria used in aspects of the invention are bacteria of the species *Bifidobacterium* lactis (Bifidobacterium animalis subs. Lactis), in particular *Bifidobacterium* lactis strain Bi-07. Strain Bi-07 is commercialised and available from DuPont.

In a first aspect, the present invention provides a bacterium of the species *Bifidobacterium lactis* for use in improving lactose digestion and/or relieving symptoms associated with lactose intolerance, in a mammal.

According to one aspect of the present invention, the bacterium of the species *Bifidobacterium lactis* is a probiotic bacterium or a mixture thereof.

The *Bifidobacterium lactis* may be used in combination with one or more other bacterial species which have the ability to exert positive health benefits on the host to which they are administered.

The *Bifidobacterium lactis* may be used in any form (for example viable, dormant, inactivated or dead bacteria) provided that the bacterium remains capable of exerting the effects described herein. Preferably, the *Bifidobacterium lactis* used in aspects of the invention is viable.

Preferably, the *Bifidobacterium lactis* and, when used in aspects of the invention, other bacterial strains, is suitable for human and/or animal consumption. A skilled person will be readily aware of specific strains of *Bifidobacterium lactis* and other bacterial strains which are used in the food and/or agricultural industries and which are generally considered suitable for human and/or animal consumption.

Optionally, the *Bifidobacterium lactis* and, when used in aspects of the invention, other bacterial strains, are probiotic bacteria. The term "probiotic bacteria" is defined as covering any non-pathogenic bacteria which, when administered live in adequate amounts to a host, confers a health benefit on that host. They are non-pathogenic, non-toxic and exercise their beneficial effect on health on the one hand via ecological interactions with the resident flora in the digestive tract, and on the other hand via their ability to influence the host physiology and immune system in a positive manner. Probiotic bacteria, when administered to a host in sufficient numbers, exerting their primary effects in the lumen and/or the wall of the host's gastrointestinal tract. They may transiently form part of the resident flora and this colonisation (or transient colonisation) allows the probiotic bacteria to exercise a beneficial effect.

Compositions

The term "composition" is used in the broad sense to mean the way something is composed, i.e. its general makeup. In aspects of the invention, the compositions may consist essentially of a single strain of *Bifidobacterium lactis*, for example, strain Bi-07.

Alternatively, the compositions may comprise a *Bifidobacterium lactis* strain together with other components, such as other bacterial strains, biological and chemical components, active ingredients, metabolites, nutrients, fibres, prebiotics, etc.

In one aspect, the present invention provides a composition comprising a bacterium of the species *Bifidobacterium lactis* for use in improving lactose digestion and/or relieving symptoms of lactose intolerance, in a mammal.

In another aspect, the bacterium of the species *Bifidobacterium lactis* is a probiotic bacterium or a mixture thereof.

In one aspect of the present invention, the bacterium of the species *Bifidobacterium lactis* is strain Bi-07.

In an aspect of the present invention, the composition is in the form of a food product, a dietary supplement or a pharmaceutically acceptable composition.

According to one aspect of the present invention, the composition is a spray-dried or freeze-dried composition.

According to another aspect of the present invention, the composition comprises a cryoprotectant.

In yet a further aspect of the present invention, the bacterium of the species *Bifidobacterium lactis* is present in the composition in an amount between $10^6$ and $10^{12}$, e.g. between $10^8$ and $10^{12}$ colony forming units (CFU) per dose, optionally $10^{10}$ CFU per dose.

While it is not a requirement that the compositions comprise any support, diluent or excipient, such a support, diluent or excipient may be added and used in a manner which is familiar to those skilled in the art. Examples of suitable excipients include, but are not limited to, microcrystalline cellulose, rice maltodextrin, silicone dioxide, and magnesium stearate. The compositions of the invention may also comprise cryoprotectant components (for example, glucose, sucrose, lactose, trehalose, sodium ascorbate and/or other suitable cryoprotectants).

The terms "composition" and "formulation" may be used interchangeably.

Compositions used in aspects of the invention may take the form of solid, liquid, solution or suspension preparations. Examples of solid preparations include, but are not limited to: tablets, pills, capsules, granules and powders which may be wettable, spray-dried or freeze dried/lyophilized. The compositions may contain flavouring or colouring agents. The compositions may be formulated for immediate-, delayed-, modified-, sustained-, pulsed- or controlled-release applications.

By way of example, if the compositions of the present invention are used in a tablet form, the tablets may also contain one or more of: excipients such as microcrystalline cellulose, lactose, sodium citrate, calcium carbonate, dibasic calcium phosphate and glycine; disintegrants such as starch (preferably corn, potato or tapioca starch), sodium starch glycollate, croscarmellose sodium and certain complex silicates; granulation binders such as polyvinylpyrrolidone, hydroxypropylmethylcellulose (HPMC), hydroxypropylcellulose (HPC), sucrose, gelatin and acacia; lubricating agents such as magnesium stearate, stearic acid, glyceryl behenate and talc may be included.

Examples of other acceptable carriers for use in preparing compositions include, for example, water, salt solutions, alcohol, silicone, waxes, petroleum jelly, vegetable oils, polyethylene glycols, propylene glycol, liposomes, sugars, gelatin, lactose, amylose, magnesium stearate, talc, surfactants, silicic acid, viscous paraffin, perfume oil, fatty acid monoglycerides and diglycerides, hydroxymethylcellulose, polyvinylpyrrolidone, and the like.

For aqueous suspensions and/or elixirs, the composition of the present invention may be combined with various sweetening or flavouring agents, colouring matter or dyes, with emulsifying and/or suspending agents and with diluents such as water, propylene glycol and glycerin, and combinations thereof.

Specific non-limiting examples of compositions which can be used in aspects of the invention are set out below for illustrative purposes. These include, but are not limited to food products, functional foods, dietary supplements, pharmaceutical compositions and medicaments.

Dietary Supplements

The compositions of the invention may take the form of dietary supplements or may themselves be used in combination with dietary supplements, also referred to herein as food supplements.

The term "dietary supplement" as used herein refers to a product intended for ingestion that contains a "dietary ingredient" intended to add nutritional value or health benefits to (supplement) the diet. A "dietary ingredient" may include (but is not limited to) one, or any combination, of the following substances: bacteria, a probiotic (e.g. probiotic bacteria), a vitamin, a mineral, a herb or other botanical, an amino acid, a dietary substance for use by people to supplement the diet by increasing the total dietary intake, a concentrate, metabolite, constituent, or extract.

Dietary supplements may be found in many forms such as tablets, capsules, soft gels, gel caps, liquids, or powders. Some dietary supplements can help ensure an adequate dietary intake of essential nutrients; others may help reduce risk of disease.

Food products

The compositions of the invention may take the form of a food product. Here, the term "food" is used in a broad sense and covers food and drink for humans as well as food and drink for animals (i.e. a feed). Preferably, the food product is suitable for, and designed for, human consumption.

The food may be in the form of a liquid, solid or suspension, depending on the use and/or the mode of application and/or the mode of administration.

When in the form of a food product, the composition may comprise or be used in conjunction with one or more of: a nutritionally acceptable carrier, a nutritionally acceptable diluent, a nutritionally acceptable excipient, a nutritionally acceptable adjuvant, a nutritionally active ingredient.

By way of example, the compositions of the invention may take the form of one of the following:

A fruit juice; a beverage comprising whey protein: a health or herbal tea, a cocoa drink, a milk drink, a lactic acid bacteria drink, a yoghurt and/or a drinking yoghurt, a cheese, an ice cream, a water ice, a dessert, a confectionery, a biscuit, a cake, cake mix or cake filling, a snack food, a fruit filling, a cake or doughnut icing, an instant bakery filling cream, a filling for cookies, a ready-to-use bakery filling, a reduced calorie filling, an adult nutritional beverage, an acidified soy/juice beverage, a nutritional or health bar, a beverage powder, a calcium fortified soy milk, or a calcium fortified coffee beverage.

Optionally, where the product is a food product, the bacterium *Bifidobacterium lactis* should remain effective through the normal "sell-by" or "expiration" date during which the food product is offered for sale by the retailer. Preferably, the effective time should extend past such dates until the end of the normal freshness period when food spoilage becomes apparent. The desired lengths of time and normal shelf life will vary from foodstuff to foodstuff and those of ordinary skill in the art will recognise that shelf-life times will vary upon the type of foodstuff, the size of the foodstuff, storage temperatures, processing conditions, packaging material and packaging equipment.

Food ingredients

Compositions of the present invention may take the form of a food ingredient and/or feed ingredient.

As used herein the term "food ingredient" or "feed ingredient" includes a composition which is or can be added to functional foods or foodstuffs as a nutritional and/or health supplement for humans and animals.

The food ingredient may be in the form of a liquid, suspension or solid, depending on the use and/or the mode of application and/or the mode of administration.

Functional Foods

Compositions of the invention may take the form of functional foods.

As used herein, the term "functional food" means food which is capable of providing not only a nutritional effect but is also capable of delivering a further beneficial effect to the consumer.

Accordingly, functional foods are ordinary foods that have components or ingredients (such as those described herein) incorporated into them that impart to the food a specific function - e.g. medical or physiological benefit - other than a purely nutritional effect.

Although there is no legal definition of a functional food, most of the parties with an interest in this area agree that they are foods marketed as having specific health effects beyond basic nutritional effects.

Some functional foods are nutraceuticals. Here, the term "nutraceutical" means a food which is capable of providing not only a nutritional effect and/or a taste satisfaction but is also capable of delivering a therapeutic (or other beneficial) effect to the consumer. Nutraceuticals cross the traditional dividing lines between foods and medicine.

Medical Foods

Compositions of the present invention may take the form of medical foods.

By "medical food" it is meant a food which is formulated to be consumed or administered with or without the supervision of a physician and which is intended for a specific dietary management or condition for which distinctive nutritional requirements, based on recognized scientific principles, are established by medical evaluation.

Pharmaceutical compositions

Compositions of the invention may be used as - or in the preparation of - pharmaceuticals. Here, the term "pharmaceutical" is used in a broad sense - and covers pharmaceuticals for humans as well as pharmaceuticals for animals (i.e. veterinary applications). In a preferred aspect, the pharmaceutical is for human use.

The pharmaceutical can be for therapeutic purposes - which may be curative, palliative or preventative in nature.

A pharmaceutical may be in the form of a compressed tablet, tablet, capsule, ointment, suppository or drinkable solution.

When used as - or in the preparation of - a pharmaceutical, the compositions of the present invention may be used in conjunction with one or more of: a pharmaceutically acceptable carrier, a pharmaceutically acceptable diluent, a pharmaceutically acceptable excipient, a pharmaceutically acceptable adjuvant, a pharmaceutically active ingredient.

The pharmaceutical may be in the form of a liquid or as a solid - depending on the use and/or the mode of application and/or the mode of administration.

The *Bifidobacterium lactis* used in the present invention may itself constitute a pharmaceutically active ingredient. In one embodiment, the *Bifidobacterium lactis* constitutes the sole active component. Alternatively, the *Bifidobacterium lactis* may be at least one of a number (i.e. two or more) of pharmaceutically active components.

Medicaments

Compositions of the invention may take the form of medicaments.

The term "medicament" as used herein encompasses medicaments for both human and animal usage in human and veterinary medicine. In addition, the term "medicament" as used herein means any substance which provides a therapeutic, preventative and/or beneficial effect. The term "medicament" as used herein is not necessarily limited to substances which need Marketing Approval, but may include substances which can be used in cosmetics, nutraceuticals, food (including feeds and beverages for example), probiotic cultures, and natural remedies. In addition, the term "medicament" as used herein encompasses a product designed for incorporation in animal feed, for example livestock feed and/or pet food.

Dosage

The compositions of the present invention may comprise from $10^6$ to $10^{12}$ CFU of *Bifidobacterium lactis* bacteria per dose or per gram of composition, and more particularly from $10^8$ to $10^{12}$ CFU of *Bifidobacterium lactis* bacteria per dose or per gram of composition. Optionally the compositions comprise about $10^{10}$ CFU *Bifidobacterium lactis* per dose or per gram of composition.

The *Bifidobacterium lactis* may be administered at a dosage from about $10^6$ to about $10^{12}$ CFU of bacteria per dose, preferably about $10^8$ to about $10^{12}$ CFU of bacteria per dose. By the term "per dose" it is meant that this number of bacteria is provided to a subject either per day or per intake, preferably per day. For example, if the bacteria are to be administered in a food product, for example in a yoghurt, then the yoghurt may contain from about $10^6$ to $10^{12}$ CFU of *Bifidobacterium lactis.* Alternatively, however, this number of bacteria may be split into multiple administrations, each consisting of a smaller amount of microbial loading - so long as the overall amount of *Bifidobacterium lactis* received by the subject in any specific time, for instance each 24-hour period, is from about $10^6$ to about $10^{12}$ CFU of bacteria,

optionally $10^8$ to about $10^{12}$ CFU of bacteria.

In accordance with the present invention an effective amount of at least one strain of a *Bifidobacterium lactis* may be at least $10^6$ CFU of bacteria/dose, optionally from about $10^8$ to about $10^{12}$ CFU of bacteria/dose, e.g., about $10^{10}$ CFU of bacteria/dose.

In one embodiment, the *Bifidobacterium lactis,* may be administered at a dosage from about $10^6$ to about $10^{12}$ CFU of bacteria/day, optionally about $10^8$ to about $10^{12}$ CFU of bacteria/day. Hence, the effective amount in this embodiment may be from about $10^6$ to about $10^{12}$ CFU of bacteria/day, optionally about $10^8$ to about $10^{12}$ CFU of bacteria/day.

Effects/Subjects/Medical indications

The bacteria and/or compositions of the present invention can be used for administration to a mammal, including for example livestock (including cattle, horses, pigs, and sheep), and humans. In some embodiments of the present invention, the mammal is a companion animal (including pets), such as a dog or a cat for instance. In preferred embodiments, the bacteria and compositions are for use in a human.

The bacteria and/or compositions of the present invention can be used for improving lactose digestion.

Furthermore, the bacteria and/or compositions of the present invention can be used for relieving symptoms of lactose intolerance.

Some symptoms of lactose intolerance or symptoms associated with lactose intolerance can be abdominal pain, flatulence, bloating, nausea, vomiting, bowel movements and diarrhoea. The bacteria or compositions of the invention can be used to relieve, treat and/or prevent recognised symptoms of lactose intolerance.

Methods, uses and other embodiments of the invention

In one aspect, the present invention provides a method of improving lactose digestion and/or relieving symptoms associated with lactose intolerance in a mammal, comprising administering to the mammal a bacterium of the species *Bifidobacterium lactis.*

In another aspect of the present invention, the bacterium of the species *Bifidobacterium lactis* is a probiotic bacterium or a mixture thereof.

In another aspect of the present invention, the bacterium of the species *Bifidobacterium lactis* is strain Bi-07.

In another aspect, the present invention also provides for the use of a bacterium of the species *Bifidobacterium lactis* for improving lactose digestion and/or relieving symptoms associated with lactose intolerance, in a mammal.

In yet another aspect, the bacterium of the species *Bifidobacterium lactis* is a probiotic bacterium or a mixture thereof.

In yest another aspect of the present invention, the bacterium of the species *Bifidobacterium lactis* is strain Bi-07.

**EXAMPLES**

The following examples are provided to demonstrate and further illustrate specific embodiments and aspects of the present invention and are not to be construed as limiting the scope thereof.

Materials and Methods

In vitro lactose hydrolysis in milk by *Bifidobacterium lactis* Bi-07

In order to induce the $\beta$-galactosidase, *Bifidobacterium lactis* Bi-07 has to be grown in a specific medium containing lactose. Fat-free milk was exposed, in vitro at 37°C, to a dose of 6 g of *Bifidobacterium lactis* Bi-07 (=$6\times10^{11}$ CFU) and compared to different commercial preparations of $\beta$-galactosidase.

Commercial $\beta$-galactosidase products or *Bifidobacterium lactis* Bi-07 were incubated in closed flasks containing 400 mL fat-free milk (Valio, Finland; lactose concentration 4.9 g/ 100 mL) in a rotating incubator at 37 °C. The commercial products with $\beta$-galactosidase were Lactrase® capsule (5000 FCC; Verman Oy, Finland), Nolact capsule (5000 FCC; Orion Pharma, Finland) and YA lactase tablet (4500 FCC; Yliopiston Apteekki, Finland). $\beta$-galactosidase containing capsules were opened and emptied into milk, and $\beta$-galactosidase tablet was ground into a fine powder using a mortar before adding to milk. 6 grams of freeze-dried *Bifidobacterium lactis* Bi-07 was mixed first in 30 mL of milk before adding to the final volume of milk. Laboratory grade $\beta$-galactosidase (cat. no. G5160-125KU, 8U/mg, Sigma) was used at 4500 FCC as a control. Samples were collected during the 6-hour incubation at 1-h intervals and 30-min intervals during the first hour. Milk was mixed thoroughly before sampling. Samples were placed in a water-bath at 90 °C for 15 min to stop enzymatic activity. Centrifugation (8500 rpm, 10 min, 4 °C) was performed to pellet the coagulated protein and bacteria, and supernatant was collected for further analysis. Further deproteinization and clarification of samples was performed according to the Carrez clarification kit (cat. no. 1.10537.0001, Millipore, Merck, Germany).

The lactose content of samples was determined using an enzymatic Lactose/D-glucose assay (cat.no. 10 986 119 035, R-Biopharm, Germany). Shortly, the assay reagents and sample (dilution 1:100) were pipetted into a macro cuvette as instructed in the kit's manual, and absorbances were measured at 340nm UV-light. The amount of lactose in the sample was calculated from the difference between the D-glucose concentration with and without enzymatic reaction produced in the assay. Lactose hydrolysis was determined by measuring residual lactose.

$\beta$-galactosidase activity of *Bifidobacterium lactis* Bi-07 after simulated gastric digestion

100 mg of sample material (freeze dried culture or laboratory grade $\beta$-galactosidase (cat. no. G5160-125KU, 8U/mg, Sigma) was mixed with 1 ml of water. Digestion basically as described by (Mäkeläinen et al., 2009). In short, 'oral cavity': 1 ml was mixed with 1.2 ml simulated Saliva adjusted to pH 6.5 after 5 min incubation at 37°C with mixing transfer to 'stomach': 2.4 ml simulated gastric juice adjusted to pH 2.5 (6mol/l HCl). After 2h incubation at 37°C with mixing 'small intestine': 2.4 ml simulated duodenal juice and 1.2 ml bile juice adjusted to pH 6.5 (8 mol/l NaOH). After 1 h 30 min incubation at 37°C with mixing. Simulated 'absorption': Centrifugation 10 000 x g, 20 min to separate protein and microbes; collect the pellets and take a sample.

Results and Comments

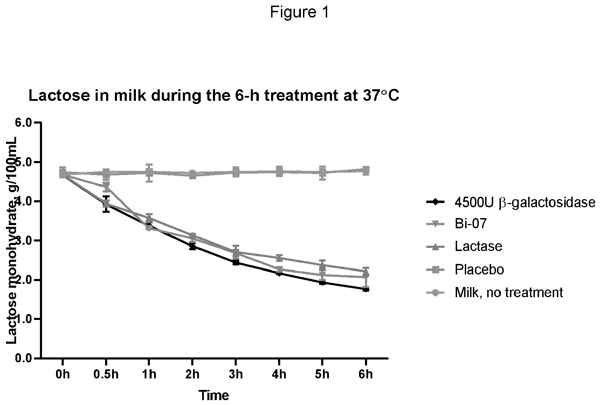

*Bifidobacterium lactis* Bi-07 was observed to reduce lactose in fat-free milk similarly as most commercial products (Figure 1). 6 g of *Bifidobacterium lactis* Bi-07 produced a similar initial reduction of lactose as 4500 FCC of commercial galactosidase (Lactrase®, Verman Oy, Finland).

Thus, 6g of native *Bifidobacterium lactis* Bi-07 has a similar activity as 4500 FCC of commercial $\beta$-galactosidase. But because the enzyme is contained in the cell, it survives simulated gastric digestion better then commercial $\beta$-galactosidase and retains a much higher activity.

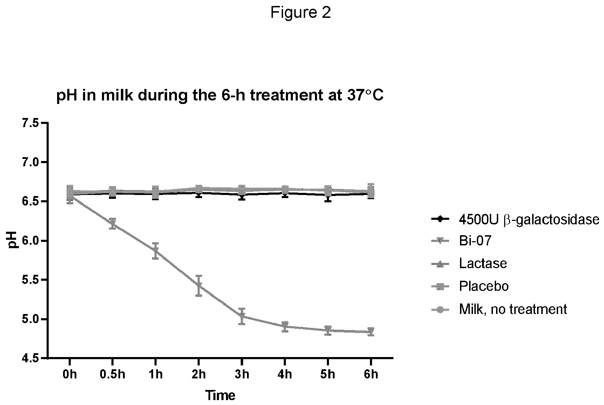

Simulating upper gastrointestinal digestion showed that $3 \times 10^{11}$ CFU *Bifidobacterium lactis* Bi-07 retained more activity then 8000 FCC of $\beta$-galactosidase enzyme (Figure 2). Lactose digestion was determined by comparing to standards of $\beta$-galactosidase in vitro at 37°C.

ABSTRACT

Milk is an important component of the mammalian diet, and lactose is present in milk and many dairy products. Nevertheless, not every individual can tolerate this kind of food, especially as adults. The absorption of lactose in humans requires activity of a lactase enzyme because excessive undigested lactose leads to e.g. flatulence, diarrhea, and cramps. The majority of the world's adult population develops deficiency of the lactase enzyme leading to a condition known as lactose intolerance. For the current *in vitro* study, the hydrolysis of lactose in milk was determined for *Bifidobacterium lactis* Bi-07 and compared to a commercial β-galactosidase product as well as pure β-galactosidase, and Bi-07 was shown to have a similar ability as these to hydrolyse lactose.

INTRODUCTION

The inability to digest lactose, a disaccharide sugar present in milk and many dairy products, is called lactose maldigestion. When a person eats food that contains lactose, an enzyme called lactase in the small intestine breaks down the lactose into simpler sugars like glucose and galactose. These are then absorbed into the bloodstream and turned into energy for our bodies. Persons with lactose maldigestion do not produce enough of lactase to break down lactose. Instead, undigested lactose remains in the gut and is broken down by bacteria, causing gas, bloating, stomach cramps, and diarrhea within minutes to hours after ingestion of food containing lactose.

Probiotics are live micro-organisms that, when administered in adequate amounts, confer a health benefit on the host (1). Probiotics may help our gut in digesting lactose and they are thus an option when searching for solutions to lactose intolerance. Probiotics have been studied in the treatment of several gastrointestinal conditions, including lactose intolerance. The lactose concentration can be reduced by probiotics (2-5). Probiotics and especially bifidobacteria might improve symptoms of lactose maldigestion, i.e. lactose intolerance, for example by modifying the pH of the gut or by affecting the composition of the colonic microbiota (2). For the current study *Bifidobacterium lactis* Bi-07 was chosen due to the results from our earlier *in vitro* studies within the same OU project.

The objective was to expose fat-free milk at 37°C, to a dose of 6 g of freeze-dried *B. lactis* Bi-07 ($1.8 \times 10^{12}$ CFU) and compare it to a commercial preparation of β-galactosidase. The lactose hydrolysis was determined by measuring the residual lactose in the milk.

METHODS

Sachets containing 6 g of *B. lactis* Bi-07 (Danisco, Madison, USA), placebo (6 g maltodextrin), or 4500 Food Chemical Codex (FCC) units of lactase of a commercial β-galactosidase product (Lactrase® Verman Oy, Finland in 6 g maltodextrin), were emptied into 500 mL fat-free, pasteurized and homogenized milk (Valio, Finland). The formulations and Certificate of Analysis can be found from Appendix I. The closed bottles were incubated in a rotating incubator (140 rpm) for 6 hours at 37 °C. Laboratory grade β-galactosidase (cat. no. G5160-125KU, 8U/mg, Sigma) was used at 4500 U as a control for lactose hydrolysis. Samples were collected during the 6-hour incubation with 30- min intervals during the first hour and thereafter with 1-hour intervals. The milk was thoroughly mixed before sampling. In order to stop the enzymatic activity, the samples were placed for 10 min in a water bath at 98 °C. Due to coagulation of the milk treated with *B. lactis* Bi-07, coagulated protein and bacteria were pelleted by centrifugation (4500 x g, 10 min), and the lactose containing supernatant was collected. Then pH was measured and recorded from the collected samples.

Further deproteinization and clarification of samples was performed according to the instructions of the Carrez clarification kit (cat.no. 1.10537.0001, Millipore, Merck, Germany). Shortly, 0.5 mL milk sample or 0.45 mL supernatant from *B. lactis* Bi-07 treated milk (a 0.45-mL supernatant was obtained after centrifugation from a 0.5 mL coagulated sample of *B. lactis* Bi-07 treated milk) was diluted in 30 mL distilled water to which Carrez solution I (containing potassium hexacyanoferrate (II) trihydrate ($K_4[Fe(CN)_6]$ x $3H_2O$)) was added and mixed carefully. Subsequently, 0.5 mL of Carrez solution II (containing zinc sulfate heptahydrate ($ZnSO_4$x $7H_2O$)) was added and mixed again. pH of the solution was adjusted to 7.5 - 8.0 by addition of sodium hydroxide solution in order to precipitate excess zinc ions as $Zn(OH)_2$. The sample solution was then filled to 50 mL with distilled water to a final dilution 1:100. The solution was centrifuged (4500 x g, 10 min) to separate the insoluble compounds and filtered through a filter paper (Whatman, Grade 41). The clear sample filtrate was used for the lactose determination.

The lactose content of samples was determined using an enzymatic Lactose/D-glucose assay (cat.no. 10 986 119 035, R-Biopharm, Germany). Shortly, the assay reagents and sample (dilution 1:100) were pipetted into a macro cuvette as instructed in the kit's manual, and absorbances were measured at 340 nm UV-light using a spectrophotometer (Ultrospec 1100 pro, Amersham Biosciences). The amount of lactose in the sample was calculated from the difference between the D-glucose concentration with and without enzymatic reaction produced in the assay.

**Statistical methods**

The three treatments (placebo, lactase and Bi-07) were compared with each other applying a repeated measures analysis of variance model by using t-rmanova.sas. The statistical analyses were performed by 4Pharma (Turku, Finland). The change from the 0-hour measurement was used as the response. The model included treatment, timepoint (0.5 h, 1 h, 2 h, 3 h, 4 h, 5 h, 6 h) and the interaction of treatment and timepoint as fixed effects and the experiment ID as a random factor. Least square means were used to estimate the differences between the three treatments.

RESULTS

The quantity of lactose determined at 1 h intervals, showed that *B. lactis* Bi-07 gave a very comparable decrease of the lactose amount as the commercial lactase and the laboratory grade β-galactosidase (Figure 1: Lactose in milk during the 6h treatment at 37 °C; raw data presented in Appendix II), while for the untreated milk and the placebo samples, there was no change in the amount of lactose during the 6-h measurements. The pH measurements (Figure 2: pH in milk during the 6h treatment at 37 °C raw data presented in Appendix III) showed that only *B. lactis* Bi-07 had an impact on the pH, with a decrease from 6.5 to just below 5.

**Figure 1.** Amount of lactose monohydrate as g per 100 ml during the 6-h treatment for untreated milk, placebo (maltodextrin), lactase (commercial lactase capsules), *B. lactis* Bi-07 and 4500U of β-galactosidase as a control. Results are presented as mean values ($\pm$ SD) from 3 separate experiments.

Figure 2. Change in pH during the 6-h treatment for untreated milk, placebo, lactase, *B. lactis* Bi-07 as well as β-galactosidase as a control. Results presented as mean values ($\pm$ SD) from 3 separate experiments.

The repeated measure ANOVA identifies within-group variation, which is a source of measurement errors so that if needed they can be excluded from analysis. The statistical results (Table 1) show that there was a significant difference between the treatments for the lactose amount over time ($p < 0.001$) in the Bi-07 and lactase treatment compared to placebo, while there was not a significant difference ($p > 0.073$) between Bi-07 and lactase.

Table 1. Analysis - comparison of treatment over time (repeated measures ANOVA)
Repeated Measures Analysis of Variance for change from baseline.

| Effect | Num DF | Den DF | F-value | p-value |
|---|---|---|---|---|
| Treatment | 2 | 4 | 1401.38 | <.0001 |
| Timepoint | 6 | 12 | 133.00 | <.0001 |
| Treatment*Timep oint | 12 | 23 | 41.57 | <.0001 |

| Statistics | Bi-07 | Lactase | Placebo |
|---|---|---|---|
| LS Mean (95% CI) | -1.85 (-1.98, -1.72) | -1.76 (-1.89, -1.63) | -0.02 (-0.15, 0.12) |
| LSM Difference Vs Placebo, 95% CI | -1.831 (-1.938, -1.723) | -1.739 (-1.846, -1.631) | |
| p-value | <.0001 | <.0001 | |
| LSM Difference Vs Lactase, 95% CI | -0.092 (-0.197, 0.014) | | |
| p-value | 0.0734 | | |

DISCUSSION

The naturally occurring sugar lactose in dairy products leads to various degrees of symptoms among manifold humans in adulthood since the ability to digest lactose or to produce enough lactase in adulthood is found to be less common throughout the world (6). Since some bifidobacterial strains have been shown to alleviate lactose intolerance through their ability to produce lactase, and due to the results from our previous *in vitro* work, *B. lactis* Bi-07 was investigated further with the simulated model of the upper gastrointestinal tract. The dose of Bi-07 used in the experiment was chosen to have a comparable level of lactase produced by the bacteria according to EFSA health claim for lactase (7) as well as what many the commercial lactase capsules contains. The amount of lactose was slightly higher after 0.5 h for Bi-07 treated milk as compared to the commercial lactase product, but thereafter the amount of lactose in milk with Bi-07 was hydrolyzed in the same way by both the commercial lactase and 4500 FCC of pure β-galactosidase.

CONCLUSION

The ability of Bi-07 to produce lactase and digest lactose was established by this *in vitro* tests. Bi-07 was shown to have a similar ability to digest lactose as the commercial lactase product and pure β-galactosidase. Thus 6 g of Bi-07 is comparable to the 4500 FCC of tested commercial lactase product.

Appendix I – CoA of the products

Appendix II

| TREATMENT: | Time of sampling | as lactose-monohydrate (g/ 100mL): | | | | |
|---|---|---|---|---|---|---|
| Milk, no treatment: | | Exp.1 | Exp.2 | Exp.3 | AVERAGE | SD |
| | 0h | 4,69 | 4,69 | 4,66 | 4,68 | 0,02 |
| | 0.5h | 4,79 | 4,75 | 4,71 | 4,75 | 0,04 |
| | 1h | 4,77 | 4,81 | 4,68 | 4,75 | 0,07 |
| | 2h | 4,68 | 4,73 | 4,75 | 4,72 | 0,04 |
| | 3h | 4,83 | 4,81 | 4,62 | 4,75 | 0,11 |
| | 4h | 4,71 | 4,90 | 4,68 | 4,76 | 0,12 |
| | 5h | 4,81 | 4,77 | 4,66 | 4,74 | 0,08 |
| | 6h | 4,77 | 4,86 | 4,68 | 4,77 | 0,09 |
| Placebo: | | Exp.1 | Exp.2 | Exp.3 | AVERAGE | SD |
| | 0h | 4,88 | 4,69 | 4,66 | 4,74 | 0,12 |
| | 0.5h | 4,71 | 4,79 | 4,53 | 4,68 | 0,13 |
| | 1h | 4,81 | 4,88 | 4,47 | 4,72 | 0,22 |
| | 2h | 4,60 | 4,73 | 4,64 | 4,66 | 0,07 |
| | 3h | data mis | 4,79 | 4,68 | 4,73 | 0,08 |
| | 4h | 4,66 | 4,83 | 4,73 | 4,74 | 0,08 |
| | 5h | 4,58 | 4,90 | 4,68 | 4,72 | 0,16 |
| | 6h | 4,79 | 4,83 | 4,84 | 4,82 | 0,03 |
| Lactase: | | Exp.1 | Exp.2 | Exp.3 | AVERAGE | SD |
| | 0h | 4,69 | 4,69 | 4,66 | 4,68 | 0,02 |
| | 0.5h | 4,02 | 3,89 | 3,91 | 3,94 | 0,07 |
| | 1h | 3,48 | 3,57 | 3,68 | 3,58 | 0,10 |
| | 2h | 3,12 | 3,10 | 3,18 | 3,14 | 0,04 |
| | 3h | 2,81 | 2,51 | 2,79 | 2,70 | 0,17 |
| | 4h | 2,58 | 2,47 | 2,60 | 2,55 | 0,07 |
| | 5h | 2,26 | 2,38 | 2,49 | 2,38 | 0,11 |
| | 6h | 2,15 | 2,15 | 2,32 | 2,21 | 0,10 |
| Bi-07: | | Exp.1 | Exp.2 | Exp.3 | AVERAGE | SD |
| | 0h | 4,69 | 4,69 | 4,66 | 4,68 | 0,02 |
| | 0.5h | 4,23 | 4,45 | 4,40 | 4,36 | 0,12 |
| | 1h | 3,33 | 3,29 | 3,31 | 3,31 | 0,02 |
| | 2h | 2,97 | 3,14 | 3,05 | 3,05 | 0,08 |
| | 3h | 2,62 | 2,77 | 2,64 | 2,67 | 0,08 |
| | 4h | 2,26 | 2,32 | 2,21 | 2,26 | 0,06 |
| | 5h | 2,08 | 2,26 | 2,02 | 2,12 | 0,13 |
| | 6h | 1,96 | 2,34 | 1,89 | 2,06 | 0,24 |
| 4500 U β-galactosidase: | | Exp.1 | Exp.2 | Exp.3 | AVERAGE | SD |
| | 0h | 4,69 | 4,66 | 4,66 | 4,67 | 0,02 |
| | 0.5h | 3,72 | 4,10 | 3,96 | 3,93 | 0,19 |
| | 1h | 3,29 | 3,39 | 3,46 | 3,38 | 0,08 |
| | 2h | 2,77 | 2,88 | 2,92 | 2,86 | 0,08 |
| | 3h | 2,39 | 2,47 | 2,45 | 2,44 | 0,04 |
| | 4h | 2,15 | 2,17 | 2,19 | 2,17 | 0,02 |
| | 5h | 1,89 | 1,96 | 1,96 | 1,94 | 0,04 |
| | 6h | 1,72 | 1,80 | 1,78 | 1,76 | 0,04 |

Appendix III

| TREATMENT: | Time of sampling | pH | | | | |
|---|---|---|---|---|---|---|
| **Milk, no treatment:** | | Exp. 1 | Exp. 2 | Exp.3 | AVERAGE | SD |
| | 0h | 6,67 | 6,67 | 6,55 | 6,63 | 0,07 |
| | 0.5h | 6,62 | 6,66 | 6,59 | 6,62 | 0,04 |
| | 1h | 6,64 | 6,68 | 6,54 | 6,62 | 0,07 |
| | 2h | 6,66 | 6,70 | 6,65 | 6,67 | 0,03 |
| | 3h | 6,68 | 6,69 | 6,62 | 6,66 | 0,04 |
| | 4h | 6,68 | 6,68 | 6,63 | 6,66 | 0,03 |
| | 5h | 6,66 | 6,68 | 6,57 | 6,64 | 0,06 |
| | 6h | 6,68 | 6,68 | 6,54 | 6,63 | 0,08 |
| **Placebo:** | | Exp. 1 | Exp. 2 | Exp.3 | AVERAGE | SD |
| | 0h | 6,57 | 6,67 | 6,55 | 6,60 | 0,06 |
| | 0.5h | 6,60 | 6,68 | 6,59 | 6,62 | 0,05 |
| | 1h | 6,60 | 6,68 | 6,55 | 6,61 | 0,07 |
| | 2h | 6,62 | 6,68 | 6,65 | 6,65 | 0,03 |
| | 3h | 6,61 | 6,67 | 6,61 | 6,63 | 0,03 |
| | 4h | 6,65 | 6,68 | 6,64 | 6,66 | 0,02 |
| | 5h | 6,63 | 6,69 | 6,60 | 6,64 | 0,05 |
| | 6h | 6,62 | 6,66 | 6,56 | 6,61 | 0,05 |
| **Lactase:** | | Exp. 1 | Exp. 2 | Exp.3 | AVERAGE | SD |
| | 0h | 6,61 | 6,67 | 6,55 | 6,61 | 0,06 |
| | 0.5h | 6,66 | 6,66 | 6,58 | 6,63 | 0,05 |
| | 1h | 6,65 | 6,67 | 6,56 | 6,63 | 0,06 |
| | 2h | 6,65 | 6,68 | 6,64 | 6,66 | 0,02 |
| | 3h | 6,65 | 6,68 | 6,59 | 6,64 | 0,05 |
| | 4h | 6,65 | 6,69 | 6,60 | 6,65 | 0,05 |
| | 5h | 6,66 | 6,68 | 6,61 | 6,65 | 0,04 |
| | 6h | 6,65 | 6,67 | 6,57 | 6,63 | 0,05 |
| **Bi-07:** | | Exp. 1 | Exp. 2 | Exp.3 | AVERAGE | SD |
| | 0h | 6,49 | 6,67 | 6,55 | 6,57 | 0,09 |
| | 0.5h | 6,23 | 6,15 | 6,27 | 6,22 | 0,06 |
| | 1h | 5,92 | 5,76 | 5,93 | 5,87 | 0,10 |
| | 2h | 5,44 | 5,29 | 5,54 | 5,42 | 0,13 |
| | 3h | 5,05 | 4,93 | 5,13 | 5,04 | 0,10 |
| | 4h | 4,93 | 4,84 | 4,94 | 4,90 | 0,06 |
| | 5h | 4,89 | 4,80 | 4,88 | 4,86 | 0,05 |
| | 6h | 4,87 | 4,79 | 4,86 | 4,84 | 0,04 |
| **4500 U β-galactosidase:** | | Exp. 1 | Exp. 2 | Exp.3 | AVERAGE | SD |
| | 0h | 6,67 | 6,55 | 6,55 | 6,59 | 0,07 |
| | 0.5h | 6,66 | 6,56 | 6,58 | 6,60 | 0,05 |
| | 1h | 6,68 | 6,55 | 6,56 | 6,60 | 0,07 |
| | 2h | 6,67 | 6,57 | 6,58 | 6,61 | 0,06 |
| | 3h | 6,65 | 6,53 | 6,57 | 6,58 | 0,06 |
| | 4h | 6,66 | 6,56 | 6,59 | 6,60 | 0,05 |
| | 5h | 6,67 | 6,52 | 6,55 | 6,58 | 0,08 |
| | 6h | 6,66 | 6,57 | 6,56 | 6,60 | 0,06 |

ABSTRACT

β-galactosidase is an essential enzyme, both for the formation of glycosylated products as well as within food industry applications for manufacturing lactose-hydrolyzed products for lactose intolerant persons. In humans, the absorption of undigested lactose in small intestine requires the activity of β-galactosidase. This study was done to determine the enzyme activity of selected bacterial strains in batch cultures as well as in a simulated model of the human upper gastrointestinal tract. Of the tested strains *Bifidobacterium lactis* Bi -07 showed to have the highest enzyme activity in simulated upper gastrointestinal tract conditions.

INTRODUCTION

Together with fats, proteins, vitamins, and minerals, milk contains carbohydrates composed of lactose and other important oligosaccharides that support the development of probiotic bacteria. β-galactosidase, or lactase, is a glycoside hydrolase enzyme required for digestion of lactose, i.e. it catalyzes the hydrolysis of β-galactosides into simpler sugars like monosaccharides by breaking the glycosidic bond. β-galactosidase is present in the small intestine and jejunum where the highest expression is found due to low bacterial concentration and, therefore, little fermentation occurs (1). β-galactosidase is important for the host organism since it is a provider in the production of energy and a source of carbon through the breakdown of lactose to galactose and glucose. It is also important for persons suffering from lactose maldigestion being the key behind making low-lactose milk and dairy products.

Probiotics are live micro-organisms that, when administered in adequate amounts, confer a health benefit on the host (2). Probiotics may help our gut in digesting lactose and they are thus an option when searching for solutions to lactose maldigestion. Probiotics have been studied in the treatment of several gastrointestinal (GI) conditions, including lactose intolerance. The lactose concentration can be reduced by probiotics (3-6). Probiotics and especially bifidobacteria might improve symptoms of lactose maldigestion, because they might be potential sources of β-galactosidase but also for example by modifying the pH of the gut or by affecting the composition of the intestinal microbiota (5).

The inability to digest lactose, a sugar present in milk and dairy products, is called lactose maldigestion. When a person eats food that contains lactose, β-galactosidase in the small intestine breaks down the lactose into simpler sugars that are absorbed into the bloodstream and turned into energy for our bodies. Persons with lactose maldigestion do not produce enough of β-galactosidase to break down lactose. Instead, undigested lactose remains in the gut and is fermented by the endogenous bacteria, causing gas, bloating, stomach cramps, and diarrhea within minutes to hours after ingestion of food containing lactose (7-9).

The objective was to study the ability of different probiotic strains or mixtures of bacteria to produce β-galactosidase, since measured activity indicates the capacity of the bacteria to ferment intestinal lactose.

METHODS

**Bacterial strains and culture conditions**

The following bacterial strains and mixtures were included: HOWARU Dophilus (*Lactobacillus acidophilus* NCFM produced for dietary supplement use; i.e. without the presence of dairy components), *Bifidobacterium lactis* Bi-07 and *L. acidophilus* NCFM (both produced for infant formula use; i.e. in the presence of dairy components), *Lactobacillus bulgaricus* KP-LB-87, *Streptococcus thermophilus* ST-21, Bulk Set Y 532, Yo-Mix 601 and Yo-Mix 401 were also all produced in fermentation media containing milk components . Of each bacterium or mixture, 0. 1 g of freeze-dried bacterial powder was mixed in 1 ml water. The quantity per g of each strain is shown in Table 1, and were determined using a flow cytometric FACS Calibur-system (BD Biosciences, San Jose, CA, USA) as previously described (10). Both versions of *L. acidophilus* NCFM were selected as prior data exists for the strain to relieve symptoms of lactose intolerance [ref]. However, this data is not consistent [ref]. Because of this, *B. lactis* Bi-07 was included. As a reference, Yo-Mix was included as yogurt is known to relieve symptoms of lactose intolerance. For the same reasons, *L. bulgaricus* and *S. thermophilus* (the components of Yo-Mix) were included in the test.

Table 1. The bacterial quantity as total cells per gram freeze-dried powder for the strains and mixtures included in the study.

| strain/mixtures | | Material No. | Batch No. | cells/g |
|---|---|---|---|---|
| *Lactobacillus acidophilus* NCFM | Howaru Dophilus | 1223579 | 1102881063 | $1.86 \times 10^{10}$ |
| *Lactobacillus bulgaricus* KP-LB-87 | KP-LB-87 | 1290141 | 1102900513 | $1.34 \times 10^{10}$ |
| *Streptococcus thermophilus* ST-21 | ST-21 | 1284026 | 1102862968 | $9.86 \times 10^{9}$ |
| *L. acidophilus* | NCFM | M85110B | 1102884609 | $5.73 \times 10^{10}$ |

(continued)

| strain/mixtures | | Material No. | Batch No. | cells/g |
|---|---|---|---|---|
| *Streptococcus thermophilus* & *Lactobacillus delbrueckii* subsp. *bulgaricus* | Bulk Set Y 532 | 13642055 | 4112948086 | 7.61 x $10^{10}$ |
| *Streptococcus thermophilus* & *Lactobacillus delbrueckii* subsp. *bulgaricus* | Yo-Mix 601 | 13650064 | 4112914885 | 2.16 x $10^{10}$ |
| *Streptococcus thermophilus* & *Lactobacillus delbrueckii* subsp. *bulgaricus* | Yo-Mix 401 | 11381063 | 4112919120 | 2.78 x $10^{11}$ |
| *Bifidobacterium lactis* | Bi-07 | 1262491 | 1102901468 | 2.97 x $10^{11}$ |

**Quantitative galactosidase enzyme assay**

β-galactosidase activity was determined from cell free extracts by comparing to standards of a p-nitrophenyl-b-d-galactopyranoside standard curve. Cell free extracts were prepared by diluting the samples 1:6 with water, where after the suspension was sonicated 4 x 15 s while samples were kept on ice and centrifuged for 5 min at 2000 g. Of the substrate solution, 0.3 ml was added to 0.2 ml of the supernatant. As blank sample, 0.3 ml of 0.1 M phosphate buffer (pH 7) was added to 0.2 ml of the supernatant. Then the samples were mixed and incubated for 1 h at 37°C before 1.5 ml of 0.25 M $Na_2CO_3$ solution was added to stop the reaction. The absorbance was measured from the cell free samples at 400 nm with a Spectramax 250 (Molecular devices, Hampton, USA) plate reader. The enzyme activities (nmol/g/min) in the samples were calculated using the following formula:

$$nmol/g/min = \frac{conc.(ng/ml) \times 6 \times 2 \ ml}{0.2 \ ml \times 139.1 \ gmol^{-1} \times 60 \ min}$$

$$6 = dilution \ factor$$

**Batch cultures**

The β-galactosidase enzyme activity in different bacterial strains or mixtures was studied by adding lactose to sealed tubes containing the pure cultures of the strain or defined mixed cultures in water. The β-galactosidase activity was determined as described above.

**Simulation of the upper gastrointestinal tract**

The digestion in the upper GI-tract was simulated as described earlier (11). Shortly, 0.1 g of bacterial strains or mixtures was suspended in 1 ml of phosphate-carbonate buffer, pH adjusted to 6.5 and incubated for 5 min with 1.2 ml of an α-amylase at 37°C to simulate what happens in the oral cavity. Subsequently, the pH was adjusted to 2.5 with HCl for the stomach stage and 2.4 ml simulated gastric juice containing pepsin was added, before incubation for 1 h 15 min at 37°C. For the stage simulating the small intestine and duodenum, the pH was neutralized to 6.5 with NaOH and then 2.4 ml simulated duodenal juice (containing pancreatin and lipase) and 1.2 ml bile juice were added, before the mixture was incubated for 1 h 30 min at 37°C. The β-galactosidase activity was determined as described above for samples taken from the stomach as well as the duodenal stages.

RESULTS

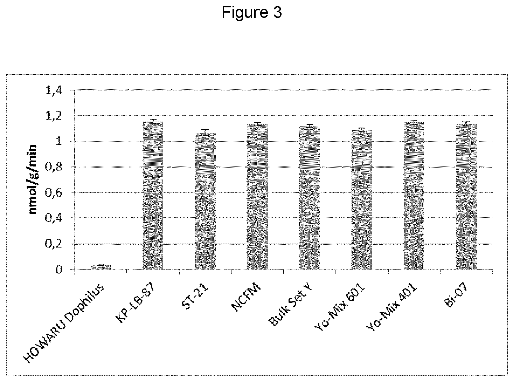

The β-galactosidase activity levels found in the different bacterial species or mixtures as batch cultures, are shown in Figure 3. HOWARU Dophilus had the lowest activity (0.033 ± 0.000 nmol/g/min) of all tested strains, while only small differences were detected between the other strains that had an activity around 1.109 nmol/g/min.

Figure 3. Enzyme activity (nmol/g/min) of the different bacterial strains or mixtures. Results are presented as mean values (± SD) from 2 separate experiments and within each experiment 3 technical replicates of each strain/mixture. The following strains or mixtures were used: *Lactobacillus acidophilus;* HOWARU Dophilus, *Lactobacillus bulgaricus;*

*KP Lb-87, Streptococcus thermophilus* ST-21; ST-21, *Lactobacillus acidophilus* NCFM; NCFM, Bulk Set Y, Yo-Mix 601, Yo-Mix 401, and *Bifidobacterium lactis* Bi-07; Bi-07.

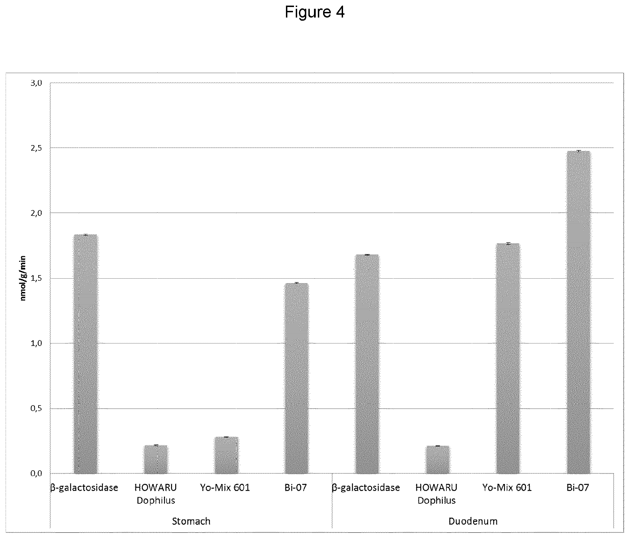

In the second part of study, the enzyme activity within the stomach and duodenal stages of the simulated upper GI-tract was determined, see Figure 4. The pure β-galactosidase had an equal activity (nmol/g/min) of 1.832 ± 0.006 and 1.678 ± 0.004, respectively. HOWARU Dophilus had low activity in both stages (0.215 ± 0.003 vs. 0.212 ±.0.001), while Yo-Mix 601 had a higher activity in the duodenal stage (0.281 ± 0.003 vs. 1.765 ± 0.007), and *B. lactis* Bi-07 had the highest activity of all in the duodenal stage (1.465 ± 0.005 vs. 2.475 ± 0.006 respectively).

Figure 4. Enzyme activity (nmol/g/min) of different bacterial strains or mixtures from stomach and duodenal step in the simulation of the upper gastrointestinal tract. Results are presented as mean values (± SD) from one experiment with 3 technical replicates of each strain/mixture. The following strains or mixtures were used: *Lactobacillus acidophilus*; HOWARU Dophilus, Yo-Mix 601 *and Bifidobacterium lactis* Bi-07; Bi-07. Purified β-galactosidase was used as a positive control.

DISCUSSION

β-galactosidase is found in bacteria, fungi, and yeasts. β-galactosidase extracted from microbial sources has been utilized for lactose hydrolysis in food and food systems due to several advantages including their high activity, ease of fermentation, and the stability of the enzyme (12). For the current study the enzyme activity was first determined in so called batch cultures of different bacterial strains or mixtures. From the batch tests, as expected, the strain that was produced in the absence of dairy components (HOWARU Dophilus) exhibited hardly any β-galactosidase, while the strains and mixtures produced in the presence of dairy components all exhibited similar high activity. However, the depletion of nutrients and accumulation of fermentation products (e.g. short chain fatty acids, SCFAs) can alter the conditions and balance in a batch fermentation, thus affecting the *in vivo* relevance. Therefore, part of the same bacterial strains and mixes were used in a simulated upper GI-tract. In the upper GI-tract simulation it appears that further β-galactosidase activity can be liberated from *B. lactis* Bi-07 and the tested Yo-Mix 601, but not from HOWARU Dophilus.

CONCLUSION

The ability of Bi-07 to produce β-galactosidase was established by these *in vitro* tests. Bi-07 was shown to have a higher enzyme activity as compared to the purified β-galactosidase as well as the other bacterial strains/mixtures tested in the simulated upper gastrointestinal tract.

INTRODUCTION

As part of the quality control and stability analysis of the Investigational Products (IP) in the Booster Alpha and Booster Omega clinical trials, lactase enzyme activity measurement was performed.

Details of the IPs in both clinical trials are the following:

- Probiotic: 6 g sachet containing probiotic powder (1.8 x $10^{12}$ CFU *Bifidobacterium lactis* Bi-07) in sachet
- Lactase: 6 g sachet containing 4500 Food Chemical Codex (FCC) units of lactase (Lactrase, Oy Verman Ab, Kerava, Finland) and maltodextrin as carrier
- Placebo: 6 g sachet containing placebo powder (maltodextrin)

METHODS

Measurements were performed by an external laboratory, Sora Labs, which was subcontracted by Eurofins Covance, an analytics provider usually used by the DuPont's Madison site. The Madison site performed the IP manufacturing and related quality control.

The measurements were performed according to the United States Pharmacopeia standard method (USP Dietary Supplements Compendium, the United States Pharmacopeial Convention, Inc., Rockville, MD, USP/DSC 2015, Appendix V, Enzyme Assays pg. 2338-2339). The needed quantity of the sample according to the requirements of the assay (0.15-0.65 ALU/ml of the test solution) was weighed in a tube and the test was performed. The test was repeated for the *B. lactis* Bi-07 and placebo samples because of the low activity levels in the initial measurements. In the final measurement, 2 replicates of the same test solution were tested, and the result received is the average of the two replicates.

RESULTS

The test was performed twice to *B. lactis* Bi-07 IP and 3 times to the lactase and placebo. The activity was measured once in the beginning of the trials in October 2018, and once after the end of the intervention of each trial, i.e. in January 2019 for Alpha and July 2019 for Omega. The results are listed in the below tables, and they are presented as Acid Lactase Units (ALU) per gram.

**Lactase Enzyme Activity Testing for Booster Alpha**

- Samples tested on 04Oct2018 were retained samples stored in Madison at refrigerated (2-8°C) temperature.
- Samples tested 09Jan2019 were Last Participant Last Visit returned clinical samples (stored refrigerated).
- The result is the average of two replicate measurements.

|  | Batch # | 4-Oct-18 | 9-Jan-19 |
|---|---|---|---|
| Placebo | 1103188911 | <10 ALU/g | <10 ALU/g |
| Lactase | 1103188915 | 777 ALU/g | 803 ALU/g |
| Alpha Bi-07 | 1103190612 | 23.0 ALU/g | 28.6 ALU/g |

**Lactase Enzyme Activity Testing for Booster Omega**

- Samples tested on 04Oct2018 were retained samples stored in Madison at refrigerated (2-8°C) temperature.
- Samples tested 12Jul2019 were Last Participant Last Visit returned clinical samples (stored refrigerated).
- The result is the average of two replicate measurements.

|  | Batch # | 04-Oct-18 | 12-Jul-19 |
|---|---|---|---|
| Placebo | 1103188911 | <10 ALU/g | <10 ALU/g |
| Lactase | 1103188915 | 777 ALU/g | 871 ALU/g |
| Omega Bi-07 | 1103190613 | 23.6 ALU/g | 32.2 ALU/g |

DISCUSSION

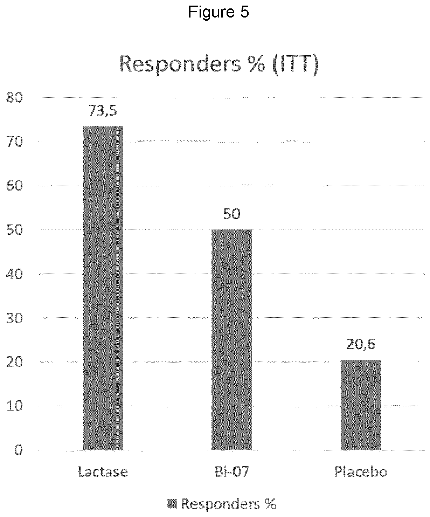

The results show that there was no lactase activity in the placebo samples, while, as expected, activity was detected for the lactase and *B. lactis* Bi-07 samples (Figure 5: Responders % (ITT)).

FCC and ALU values are directly comparable, and since the sachet contains 6 g of material, i.e. 4500 FCC for the lactase, the expected enzyme activity in 1 g of material would be 750 FCC. Thus, the measured enzyme activity of the lactase samples corresponds with 4500 FCC of lactase, which was weighed into the lactase IP sachets together with maltodextrin.

Since the lactase enzyme produced by *B. lactis* Bi-07 resides mainly inside the cells and might be released in the case of cell death or potential export from the cells, the activity is quite low compared to lactase sample, in which the enzyme is freely available.

There seems to be variation between the different testing timepoints: there was total increase of 12.1 % detected for lactase (time between measurements 9.5 months), 24.4 % for Alpha Bi-07 (time between measurements 3 months) and 36.4 % for Omega Bi-07 (time between measurements 9.5 months). The provider of the analysis informed us that for pure lactase measurement uncertainty is 9.5 %, but the number increases when other substances are added to the sample. With pure lactase the result is usually around 100 000 ALU/g.

In our lactase samples, there was approximately 0.27 g lactase and 5.73 g maltodextrin, and in the *B. lactis* Bi-07 samples lactase was mainly inside the cells and hence not well available for the measurement. The increase in the Bi-07 samples might be explained by release of lactase from the cells as their viability slowly decreases during time. The increase in the lactase samples could be explained by the measurement uncertainty. In addition, it is unlikely that the activity of the enzyme would increase during time, instead it should decrease due to gradual inactivation of the enzyme.

**Claims**

1. Bacterium of the species *Bifidobacterium lactis* for use in improving lactose digestion and/or relieving symptoms associated with lactose intolerance, in a mammal.

2. The bacterium for use according to claim 1, wherein the bacterium of the species *Bifidobacterium lactis* is a probiotic bacterium or a mixture thereof.

3. The bacterium for use according to any one of the claims 1-2, wherein the bacterium of the species *Bifidobacterium lactis* is strain Bi-07.

4. Composition comprising a bacterium of the species *Bifidobacterium lactis* for use in improving lactose digestion and/or relieving symptoms associated with lactose intolerance, in a mammal.

5. The composition for use according to claim 4 wherein the bacterium of the species *Bifidobacterium lactis* is a probiotic bacterium or a mixture thereof.

6. The composition according to any one of the claims 4-5, wherein the bacterium of the species *Bifidobacterium lactis* is strain Bi-07.

7. The composition according to any of claims 4-6, wherein the composition is in the form of a food product, a dietary supplement or a pharmaceutically acceptable composition.

8. The composition according to any of claims 4-7, wherein the composition is a spray-dried or freeze-dried composition.

9. The composition according to claim 8, wherein the composition comprises a cryoprotectant.

10. The composition according to any of the claims 4-9, wherein the bacterium of the species *Bifidobacterium lactis* is present in the composition in an amount between $10^6$ and $10^{12}$, e.g. between $10^8$ and $10^{12}$ CFU per dose, optionally $10^{10}$ CFU per dose.

11. A method of improving lactose digestion and/or relieving symptoms associated with lactose intolerance in a mammal, comprising administering to the mammal a bacterium of the species *Bifidobacterium lactis.*

12. The method according to claim 11, wherein the bacterium of the species *Bifidobacterium lactis* is a probiotic bacterium or a mixture thereof.

13. The method according to any one of the claims 11 or 12, wherein the bacterium of the species *Bifidobacterium lactis* is strain Bi-07.

14. Use of a bacterium of the species *Bifidobacterium lactis* for improving lactose digestion and/or relieving symptoms associated with lactose intolerance, in a mammal.

15. The use according to claim 14, wherein the bacterium of the species *Bifidobacterium lactis* is a probiotic bacterium or a mixture thereof.

16. The use according to any one of the claims 14 or 15, wherein the bacterium of the species *Bifidobacterium lactis* is strain Bi-07.

Figure 1

Lactose in milk during the 6-h treatment at 37°C

Figure 2

pH in milk during the 6-h treatment at 37°C

Figure 3

Figure 4

Figure 5

Responders % (ITT)

Europäisches
Patentamt

European
Patent Office

Office européen
des brevets

# EUROPEAN SEARCH REPORT

**Application Number**

EP 19 20 9460

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 329 415 A (HANGZHOU QIANDAOHU CANOBANK HEALTH PRODUCTS CO LTD) 15 February 2019 (2019-02-15) * paragraphs [0014], [0078]; claims 1,7,8 * | 1-16 | INV. A23L5/20 A23L33/135 |
| X | KR 101 964 883 B1 (SEOUL NAT UNIV R&DB FOUNDATION) 2 April 2019 (2019-04-02) * paragraphs [0001], [0009] - [0011], [0013], [0048], [0062]; claims 1-2 * | 1,2,4,5, 8-12,14, 15 | |
| X | WO 2009/048934 A2 (DANISCO) 16 April 2009 (2009-04-16) * page 13, lines 9-12; claims 1-6 * | 1-16 | |
| X | CN 106 581 081 A (WUBIDI PHARMACEUTICAL CO LTD) 26 April 2017 (2017-04-26) | 1,2,4,5, 10-12, 14,15 | |
| A | * Translated page 3, paragraph 1.; claim 5 * | 7-9 | |
| A | MARI AMIR ET AL: "Bloating and Abdominal Distension: Clinical Approach and Management", ADVANCES IN THERAPY, HEALTH COMMUNICATIONS, METUCHEN, NJ, US, vol. 36, no. 5, 16 March 2019 (2019-03-16) , pages 1075-1084, XP036769290, ISSN: 0741-238X, DOI: 10.1007/S12325-019-00924-7 [retrieved on 2019-03-16] | 1-16 | **TECHNICAL FIELDS SEARCHED (IPC)** A23L |

The present search report has been drawn up for all claims

| Place of search | Date of completion of the search | Examiner |
|---|---|---|
| The Hague | 8 June 2020 | Kanbier, Titia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 9460

This annex lists the patent family members relating to the patent documents cited in the above-mentioned European search report.
The members are as contained in the European Patent Office EDP file on
The European Patent Office is in no way liable for these particulars which are merely given for the purpose of information.

08-06-2020

| Patent document cited in search report | | Publication date | Patent family member(s) | | Publication date |
|---|---|---|---|---|---|
| CN 109329415 | A | 15-02-2019 | NONE | | |
| KR 101964883 | B1 | 02-04-2019 | NONE | | |
| WO 2009048934 | A2 | 16-04-2009 | AU | 2008310961 A1 | 16-04-2009 |
| | | | AU | 2014210581 A1 | 28-08-2014 |
| | | | CA | 2702293 A1 | 16-04-2009 |
| | | | CN | 101998834 A | 30-03-2011 |
| | | | DK | 2209527 T3 | 18-03-2013 |
| | | | EP | 2209527 A2 | 28-07-2010 |
| | | | ES | 2399775 T3 | 03-04-2013 |
| | | | HK | 1146914 A1 | 19-07-2013 |
| | | | JP | 5674741 B2 | 25-02-2015 |
| | | | JP | 5758629 B2 | 05-08-2015 |
| | | | JP | 2011501664 A | 13-01-2011 |
| | | | JP | 2013040186 A | 28-02-2013 |
| | | | PL | 2209527 T3 | 29-03-2013 |
| | | | US | 2011033423 A1 | 10-02-2011 |
| | | | WO | 2009048934 A2 | 16-04-2009 |
| CN 106581081 | A | 26-04-2017 | NONE | | |

EPO FORM P0459

For more details about this annex : see Official Journal of the European Patent Office, No. 12/82